# EUROPÄISCHE PATENTSCHRIFT

(11) **EP 2 369 242 B1**
(45) Veröffentlichungstag und Bekanntmachung des Hinweises auf die Patenterteilung: **26.12.2012**
(21) Anmeldenummer: 11002518.6
(22) Anmeldetag: 26.03.2011
(51) Int. Cl.: F24D 3/10

(54) **Druckausgleichsvorrichtung für flüssigkeitsdurchströmte Systeme**
Pressure equalising device for systems through which fluid flows
Dispositif de rééquilibrage de pression pour systèmes traversés par un fluide

(30) Priorität: 26.03.2010 CH 4452010
(43) Veröffentlichungstag der Anmeldung: 28.09.2011
(73) Patentinhaber: Olaer (Schweiz) AG, 8186 Düdingen (CH)
(72) Erfinder: Schneider, Peter, 1715 Alterswil (CH); Aebischer, Charles, 1713 St. Antoni (CH)
(74) Vertreter: Wüstefeld, Regine Marie

(56) Entgegenhaltungen:
- DE-A1- 2 258 027
- DE-A1- 4 242 036
- DE-U1- 20 002 709
- DE-U1- 20 014 804
- DE-U1- 29 512 409

## Beschreibung

Die Erfindung betrifft eine Druckausgleichsvorrichtung für flüssigkeitsdurchströmte Systeme, die einen Druckbehälter für den Druckausgleich aufweist, mit einer elastischen Membran, die einen Hohlraum für die Aufnahme der Flüssigkeit bildet, und einem an den Hohlraum angrenzenden Druckgasraum, wobei die Membran über einen Anschlussstutzen mit einem Anschlussrohr für die Flüssigkeit verbunden ist. Die Erfindung betrifft ebenso bevorzugte Verwendungen dieser Druckausgleichsvorrichtung.

Solche Druckausgleichsvorrichtungen können unter anderem als Dämpfer bei Druckschlägen und zur Verminderung von Pulsationen in Leitungen von Wasser, Abwasser sowie anderen flüssigen Medien eingesetzt werden.

Druckschläge in Rohrleitungssystemen, wie Wasserversorgungs- und Wasserentsorgungsleitungen, sind sinusförmige Druckwellen, die durch ein abruptes Einschalten oder Unterbrechen des Wasserflusses bedingt sein können, weil sich Wasser nicht komprimieren lässt. Sie treten z. B. durch das schnelle Öffnen oder Schliessen von Armaturen, wie Mischbatterien, und Ventilen auf, ebenso beim direkten Ein- und Abschalten von Pumpen, bei Stromausfall in Pumpstationen sowie durch Öffnen oder Schliessen von Hydranten in Löschleitungen.

Druckschläge verursachen Druckschwankungen, welche ein Mehrfaches des normalen Leitungsdrucks betragen können. Durch diesen wiederholten, kurzfristigen Druckanstieg wird das Rohrleitungssystem erheblich belastet. Dies kann zum Ausfall von Armaturen und zu sonstigen Schäden im Leitungssystem führen.

Um die Amplituden solcher Druckwellen soweit zu dämpfen, dass einerseits keine Schäden im Leitungssystem entstehen und andererseits die mit den Druckschlägen einhergehende Geräuschbelästigung minimiert wird, ist es bekannt, sogenannte Druckschlagdämpfer einzusetzen.

Diese Druckschlagdämpfer bestehen grundsätzlich aus einem mit Gas befüllten Druckbehälter und einer in dem Druckbehälter angeordneten Membran, die in der Regel aus einem elastischen Kunststoff gebildet ist, welche das Wasser oder allgemein die Flüssigkeit aufweist und mit dem Leitungssystem über eine Öffnung des Druckbehälters in Verbindung steht. Diese Öffnung dient gleichzeitig als Membrananschluss und garantiert eine sichere Trennung zwischen der Flüssigkeit und dem Gas. Als Gas wird in der Regel Stickstoff oder Luft verwendet.

Über eine solche Anordnung können sowohl Druckschläge in Form eines hohen Druckanstiegs bei Überdruck wie auch eines Druckabfalls durch Unterdruck abgefangen werden.

Grundsätzlich werden solche Druckschlagdämpfer aber auch als Energiespeicher und Pulsationsdämpfer sowie als Druckhalte- und Druckausdehnungsgefässe, im Heizungsbereich und allgemein im Bereich der Trinkwasser- und Lebensmittelversorgungsanlagen eingesetzt. Als Druckausdehnungsgefässe können sie z. B. in Trinkwassererwärmern auch dazu dienen, temperaturbedingte Volumenschwankungen auszugleichen.

Bei der Anwendung der vorgenannten Druckausgleichsvorrichtungen im Bereich der Trinkwasser- oder Lebensmittelversorgungsanlagen besteht grundsätzlich das Problem der Keimbelastung. An der Innenseite der Membran, welche die Flüssigkeit aufweist, kann sich ein Bakterienschleim ausbilden, der sich bei dem Auftreten grosser Druckwellen abrupt ablösen und in das Trinkwasser- oder Lebensmittelversorgungssystem übergehen kann. Zusätzlich kann die Flüssigkeit in der Membran dann, wenn sie bei konstantem Betrieb der Anlage längere Zeit ohne grössere Druckbelastung steht, eine zu hohe Keimbelastung entwickeln. Daher besteht der Bedarf, die Keimbildung in solchen Druckbehältern möglichst zu verhindern.

Um dies zu erreichen, wird in der DE 199 45 105 A1 bei einem gattungsgemässen Druckbehälter für Versorgungsanlagen in Form von wasserführenden Systemen vorgeschlagen, die Membran mit einer keimwachstumshemmenden Auskleidung zu versehen. Dazu weist die Gummimembran eine Auskleidung in Form einer dünnwandigen Folie oder eines Kunststoffs, aus Kautschuk oder einem anderen Naturstoff, vorzugsweise aber eine Auskleidung in Form einer Polyamidbeschichtung auf.

Das Problem eines abstehenden, nicht ausgetauschten Wasservolumens im konstanten Betrieb, d.h. ohne wesentliche Druckschwankungen, wird dadurch zumindest nicht ausreichend gelöst.

Durch die DE 42 42 036 A1 ist demgegenüber eine Vorrichtung mit einem Druckbehälter bekannt geworden, die als Ausdehnungsgefäss für erwärmtes Trinkwasser in einem geschlossenen Behälter, z. B. bei Wärmeaustausch mit Heizungswasser, dient und über eine Anschlussarmatur einen Zwangsaustausch des in dem Ausdehnungsgefäss vorhandenen Wassers ermöglicht. Um dies zu erreichen, schlägt die DE 42 42 036 A1 im wesentlichen zwei Ausführungsformen vor. Gemäß einer ersten, einfacher zu realisierenden Ausführung wird der gesamte Wasserstrom, der zu dem Trinkwassererwärmer führt, durch das Ausdehnungsgefäss geleitet. Um dies zu erreichen, wird ein von einem aussermittigen Einlass in den Hohlraum ragendes Einlassrohr vorgeschlagen, durch das eine Strömung in etwa quer durch den Hohlraum zu einem ebenso aussermittig angeordneten Auslass erzeugt wird. Das Dokument weist selbst bereits zutreffend auf die Druckverluste hin, die bei dieser Wasserführung entstehen.

Als Alternative wird eine deutlich aufwendiger zu realisierende Ausführung für den Zwangsaustausch des Wassers vorgeschlagen, bei welcher der Hauptstrom des Trinkwassers unbeeinflusst von einem Eingang zu einem Ausgang fliesst und nur ein Nebenstrom in den Hohlraum des Ausdehnungsgefässes geleitet wird. Dazu ist eine Anschlussarmatur vorgesehen, mit benachbart zueinander angeordnetem Einlass und Auslass. Die Strömungsrichtung in der Anschlussarmatur bleibt wie schon bei der ersten Ausführung parallel zu dem direkten Strömungskanal orientiert. Im Bereich von Einlass und Auslass weist nun eine Trennwand zwischen beiden einen Durchlass auf. Dieser bewirkt für das aus der Trinkwasserleitung einströmende Wasser eine Sogwirkung entgegengesetzt zu der Strömungsrichtung. Es wird daher nur ein Teil des Wassers tatsächlich in den Hohlraum geführt. Der Hauptteil fliesst mit dem aus dem Hohlraum herausströmenden Wasser wieder ab. Auf diese Weise wird zwar ein Zwangsaustausch des Wassers erreicht, ohne den gesamten Wasserstrom durch das Ausdehnungsgefäss zu leiten, die dafür vorgesehene Anschlussarmatur ist allerdings fertigungstechnisch sehr aufwendig.

Demgegenüber schlägt nun das deutsche Gebrauchsmuster DE 200 02 709 U1 eine Vorrichtung zur Zwangsdurchströmung von Ausdehnungsgefässen vor, bei der ein gattungsgemäss ausgebildeter Druckbehälter im Bereich der Behälteröffnung einen Anschlussstutzen zur Verbindung mit einer Trinkwasserversorgungsleitung aufweist. Die lichte Querschnittsfläche dieses Anschlussstutzens ist durch eine Leitvorrichtung in eine Einströmfläche und eine Ausströmfläche unterteilt, die unterschiedlich gross sind. Auf diese Weise wird ein Teil des Frischwassers in das Ausdehnungsgefäss geführt, wobei sich bedingt durch die unterschiedlich grossen Ein- und Ausströmflächen unterschiedliche Strömungsgeschwindigkeiten ausbilden. Dadurch soll eine intensive Durchmischung und Durchströmung des Wassers in dem Ausdehnungsgefäss erreicht werden.

Auch wenn diese Vorrichtung ohne Ventile auskommt und insofern eine vereinfachte Ausführung ermöglicht, bleibt auch hier der Nachteil, dass die unterschiedlich grossen Ein- und Ausströmflächen über sternförmig angeordnete Leitflächen einer ungeraden Anzahl realisiert werden müssen, was fertigungstechnisch ebenfalls aufwendig ist.

Die DE 200 14 804 U1 löst das Problem der Zwangsdurchströmung von Ausdehnungsgefässen durch eine Anschlussvorrichtung, die einen Anschlussstutzen aufweist, in dem mittig eine Strömungsleitvorrichtung in Form eines Rohres angeordnet ist. Der Durchmesser dieser rohrförmigen Strömungsleitvorrichtung ist kleiner als der des Anschlussstutzens, so dass dort ein Ringraum ausgebildet ist. In die rohrförmige Strömungsleitvorrichtung wird gemäss einer Ausführungsform ein Teilstrom des Wassers aus einer Trinkwasserversorgung geleitet. Dazu weist das Rohr einen Krümmer auf, der in ein T-Stück ragt. Dieses verbindet den Anschlussstutzen mit der Trinkwasserversorgung. Der Krümmer öffnet sich bei dieser Ausführungsform in Anströmrichtung des Wassers. Das entgegengesetzte obere Ende der rohrförmigen Strömungsleitvorrichtung endet in einem Strömungsring, der oberhalb eines Freiraums angeordnet ist. Der Strömungsring weist Durchströmöffnungen in das Ausdehnungsgefäss auf. Über diese gelangt das Wasser in das Ausdehnungsgefäss. Der Durchmesser des Strömungsrings entspricht in etwa dem Durchmesser des Anschlussstutzens und lässt so den Freiraum entstehen. Dieser seinerseits dient dazu, Wasser aus dem Ausdehnungsgefäss über den konzentrisch zu der rohrförmigen Strömungsleitvorrichtung angeordneten Ringraum wieder zu der Trinkwasserversorgung zurückzuführen. Auf diese Weise wird sowohl ein Austausch als auch eine gute Durchwirbelung des Wassers in dem Ausdehnungsgefäss erreicht, sobald Wasser aus dem Trinkwasserversorgungssystem entnommen wird.

Gemäss einer weiteren Ausführungsform öffnet sich der Krümmer entgegen der Anströmrichtung des Wassers. Dann wird das Wasser nicht durch die Strömungsleitvorrichtung, sondern durch den Ringraum und durch dort am oberen Ende vorgesehene seitliche Durchströmöffnungen in das Ausdehnungsgefäss geführt. Wasser aus dem Ausdehnungsgefäss wird dann über die rohrförmige Strömungsleitvorrichtung wieder zu der Trinkwasserversorgung zurückgeführt.

Ausgehend von diesem Stand der Technik liegt der vorliegenden Erfindung daher die Aufgabe zugrunde, eine Druckausgleichsvorrichtung für flüssigkeitsdurchströmte Systeme bereitzustellen, die als Druckschlagdämpfer z. B. in Sanitärinstallationen, als Druckhalte- und Ausdehnungs- bzw. Expansionsgefäss, im Lebensmittelbereich, einschliesslich der Trinkwasserversorgung, im Heizungsbereich sowie als Energiespeicher und Pulsationsdämpfer eingesetzt werden kann, und dabei auf eine konstruktiv einfache Weise eine Zwangsdurchströmung des Druckbehälters der Druckausgleichsvorrichtung ermöglicht ohne dass die Druckverluste zu sehr zunehmen.

Diese Aufgabe wird erfindungsgemäß durch eine Druckausgleichsvorrichtung für flüssigkeitsdurchströmte Systeme gelöst, die einen Druckbehälter für den Druckausgleich aufweist, mit einer elastischen Membran, die einen Hohlraum für die Aufnahme der Flüssigkeit bildet, und einem an den Hohlraum angrenzenden Druckgasraum, wobei die Membran über ein Verbindungsmittel, vorzugsweise in Form eines Anschlussstutzens, mit einem Anschlussrohr für die Flüssigkeit verbunden ist, ein separat dazu geführtes Rohr für die Flüssigkeit über das Verbindungsmittet, vorzugsweise den Anschlussstutzen, in den Holraum ragt, dabei von einem siebartig ausgebildeten Hohlzylinder konzentrisch umgeben ist, so dass zwischen dem äusseren Umfang des Rohres und dem Hohlzylinder ein Ringraum definiert ist, und wobei der Hohlzylinder in ein Abschlussstück mündet, in das sich das Rohr öffnet, und das siebartige Öffnungen für das Ausströmen der Flüssigkeit in den Hohlraum aufweist, und wobei das separat geführte Rohr im Betriebszustand in das flüssigkeitsdurchströmte System ragt und das Anschlussrohr für die Flüssigkeit im Betriebszustand in das flüssigkeitsdurchströmte System mündet.

Dadurch, dass ein separat geführtes Rohr vorgesehen ist, welches in den Hohlraum ragt, und das von dem siebartig ausgebildeten Hohlzylinder konzentrisch umgeben ist, wird auf konstruktiv einfache Weise eine Zwangsdurchströmung des Druckbehälters ermöglicht, weiche die Keimbelastung der Flüssigkeit in dem Druckbehälter niedrig hält. Dabei kann dieses separat geführte Rohr sowohl als Zulaufrohr wie als Ablaufrohr ausgebildet sein, je nachdem, ob die Strömungsrichtung der Flüssigkeit in dem flüssigkeitsdurchströmten System es erlaubt, dass die Flüssigkeit direkt in das Rohr fliesst oder nicht. Auf diese Weise wird eine Druckausgleichsvorrichtung bereitgestellt, die unabhängig von den örtlichen Gegebenheiten einsetzbar ist und insbesondere ein unabhängiges Platzieren des DrucKbehälters ermöglicht.

Vorzugsweise ist die den Hohlraum bildende Membran als Blasenmembran und aus einem lebensmittelechten Kunst- oder Naturstoff gebildet. Dieser kann ausgewählt sein aus Gummi in Form von Naturkautschuk oder synthetischem Kautschuk.

Gemäss einer Ausführungsform der erfindungsgemässen Druckausgleichsvorrichtung ist das Verbindungsmittel in Form eines Anschlussstutzens ausgebildet. Ausserdem weist die Membran einen Rand auf, mit dem sie zwischen einem Flansch des Druckbehälters und einem Flansch des Anschlussstutzens eingespannt ist, wobei der Flansch des Anschlussstutzens einen Vorsprung definiert, indem er einen kleineren Innendurchmesser aufweist als der Flansch des Druckbehälters.

Auf diese Weise kann vorgesehen sein, dass der siebartig ausgebildete Hohlzylinder auf dem Vorsprung gelagert ist, wobei er das Rohr im Bereich von dessen Erstreckung in den Hohlraum hinein konzentrisch umgibt.

Auf diese Weise kann zwischen dem äusseren Umfang des Rohres und dem Hohlzylinder ein Ringraum definiert sein, der in ein deckelförmig, aber hohl ausgebildetes Abschlussstück mündet.

Das Rohr kann sich in das Abschlussstück hinein öffnen, wobei das Abschlussstück vorzugsweise an der dieser Mündung des Zulaufrohres gegenüber liegenden Begrenzung siebartige Öffnungen aufweist.

Die Erfindung betrifft auch Verwendungen der Druckausgleichsvorrichtung in den Ausgestaltungen, wie sie weiter oben beschrieben worden sind.

So kann die erfindungsgemässe Druckausgleichsvorrichtung als Druckschlag- und Pulsationsdämpfer in Wasserversorgungs- und entsorgungsanlagen verwendet werden. Dabei ist grundsätzlich der gesamte Bereich der Sanitärinstallationen angesprochen.

Eine weitere bevorzugte Verwendung betrifft den Einsatz als Druckhalte- und Ausdehnungs- bzw. Expansionsgefäss. Bei der Verwendung als ein solches Expansionsgefäss wird die erfindungsgemässe Druckausgleichsvorrichtung z.B. in Verbindung mit einem Trinkwassererwärmer eingesetzt. Wenn dem Trinkwassererwärmer warmes Wasser entnommen wird, fliesst kaltes Wasser nach und wird erneut erwärmt. Durch diesen Aufwärmvorgang dehnt sich das Wasser und damit gleichzeitig der Hohlraum des Druckbehälters weiter aus und drückt dadurch das Gasvolumen in dem Druckgasraum zusammen.

Eine besonders bevorzugte Verwendung umfasst den Einsatz im Lebensmittelbereich, einschliesslich der Trinkwasserversorgung. Im Hinblick auf den Lebensmittelbereich ist hier insbesondere die Getränkeproduktion zu nennen. Dann befindet sich in dem flüssigkeitsdurchströmten System anstelle von Wasser z.B. Fruchtsaft.

Als weitere erfindungsgemässe Verwendungen sind noch der Einsatz im Heizungsbereich und als Energiespeicher zu erwähnen.

Im Folgenden soll die Erfindung anhand von Ausführungsbeispielen und der beigefügten Zeichnung näher erläutert werden.

Es zeigen:
- Fig. 1: eine teilweise geschnittene Ansicht einer erfindungsgemäßen Druckausgleichsvorrichtung und ihrer Verbindung zu einer Trinkwasserversorgungsanlage,
- Fig. 2: einen gegenüber Fig. 1 vergrössert dargestellten Ausschnitt der Druckausgleichsvorrichtung im Bereich des siebartigen Hohlzylinders mit Flansch und Rohr als teilweise geschnittene Ansicht, und
- Fig.3: einen gegenüber Fig. 1 vergrössert dargestellten Ausschnitt der Druckausgleichsvorrichtung im Bereich der Verbindung des Rohrs mit dem flüssigkeitsdurchströmten System als Ansicht.

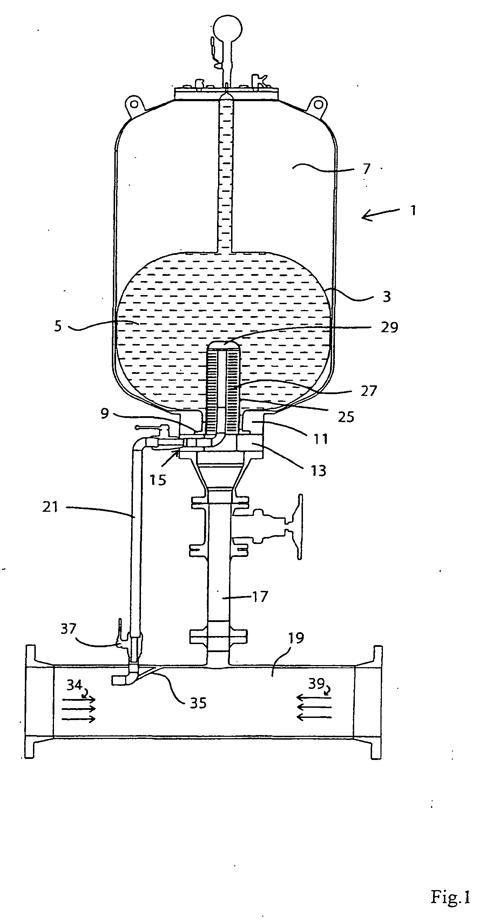

In Fig. 1 ist eine Druckausgleichsvorrichtung für flüssigkeitsdurchströmte Systeme dargestellt, die einen insgesamt mit der Bezugsziffer 1 bezeichneten Druckbehälter aufweist. In diesem ist eine als Blasenmembran ausgebildete elastische Membran 3 angeordnet, die einen Hohlraum 5 definiert, der zumindest teilweise mit der Flüssigkeit befüllt ist, welche durch das System strömt. Für die Zwecke der Erläuterung der erfindungsgemässen Druckausgleichsvorrichtung wird in diesem Ausführungsbeispiel exemplarisch und nicht einschränkend auf eine Trinkwasserversorgungsanlage Bezug genommen. Dafür besteht die elastische Membran 3 aus einem lebensmittelechten Gummi. Oberhalb der den Hohlraum 5 definierenden Membran 3 befindet sich ein mit Gas befüllter Druckgasraum 7. Als Gas ist hier Stickstoff verwendet. Es ist aber auch die Verwendung anderer Gase möglich, wie z. B. Luft oder auch Kombinationen aus zumindest zwei verschiedenen Gasen. Die Stickstoffgasfüllung bildet ein Dämpfervolumen, das entweder zur Aufnahme überschüssiger Energie oder zur Abgabe von zusätzlicher Energie genutzt werden kann.

Durch die elastische Membran 3 werden der Druckgasraum 7, welcher die Stickstoffgasfüllung aufweist, und der Hohlraum 5 so voneinander getrennt, dass im wesentlichen kein Diffundieren des Stickstoffs in den Hohlraum 5 und kein Entleeren in die nachfolgend angeordneten Leitungen möglich ist.

Dazu ist die Membran 3 mit ihrem Rand 9 zwischen einem Flansch 11 des Druckbehälters 1 und einem Flansch 13 eines insgesamt mit 15 bezeichneten Anschlussstutzens eingespannt. An den Anschlussstutzen 15 schliesst sich ein Anschlussrohr 17 für die Flüssigkeit, hier das Wasser, an, das in einen Strömungskanal 19 der ansonsten nicht näher dargestellten Trinkwasserversorgungsanlage mündet.

Separat und damit unabhängig von dem Anschlussrohr 17 ist ein Rohr 21 für Wasser geführt, das je nach Ausführung als Zu- oder Ablaufrohr für Wasser ausgebildet sein kann. In dem hier erläuterten Ausführungsbeispiel dient es als Zulaufrohr und speist sich entsprechend aus dem Strömungskanal 19. Gemäß einer weiteren Ausführungsform der vorliegenden Erfindung, die weiter unten noch näher erläutert wird, kann das Rohr 21 als Ablaufrohr gestaltet sein. Die nachfolgenden allgemeinen Ausführungen zu diesem Zulauf- wie Ablaufrohr gelten für beide Ausführungsformen gleichermassen.

Das Rohr 21 wird über eine Aussparung 22 in dem Flansch 13 des Anschlussstutzens 15 in den Hohlraum 5 geführt und ragt deutlich in diesen hinein.

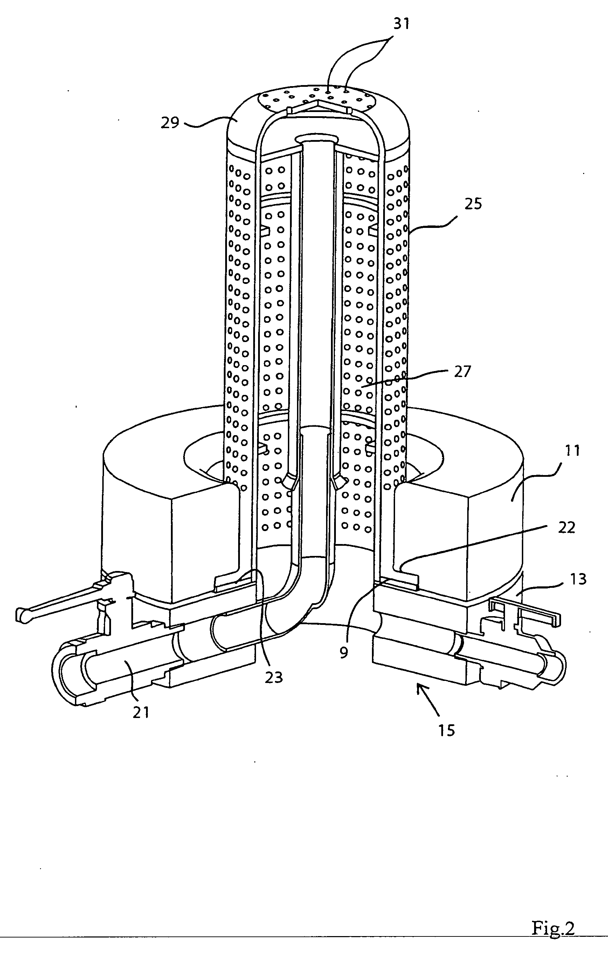

Wie Fig. 2 zeigt, weist der Flansch 13 des Anschlussstutzens 15 einen kleineren Innendurchmesser auf als der Flansch 11 des Druckbehälters 1. Dadurch bildet der Flansch 13 des Anschlussstutzens 15 einen Vorsprung 23, auf dem ein siebartig ausgebildeter Hohlzylinder 25 gelagert ist, der das Rohr 21 im Bereich seiner Erstreckung in den Hohlraum 5 hinein konzentrisch umgibt. Zwischen dem äusseren Umfang des Rohres 21 und dem Hohlzylinder 25 ist dabei ein Ringraum 27 definiert, der in ein deckelartiges, hohles Abschlussstück 29 mündet. In dieses Abschlussstück 29 hinein mündet und öffnet sich das Rohr 21. An der dieser Mündung des Rohres 21 gegenüberliegenden Begrenzung des Abschlussstücks 29 weist dieses in Fig. 2 deutlich erkennbare siebartige Öffnungen 31 für das Ausströmen des Wassers in den Hohlraum 5 auf.

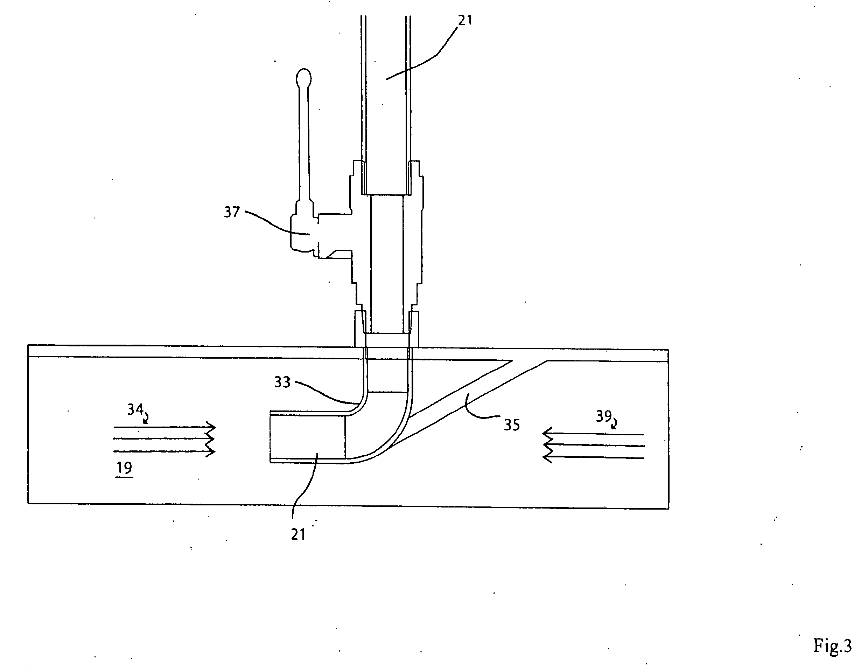

In Fig. 3 ist der Bereich der erfindungsgemässen Druckausgleichsvorrichtung noch einmal vergrössert dargestellt, in welchem das separat geführte Rohr 21 in das flüssigkeitsdurchströmte System, im Ausführungsbeispiel in den Strömungskanal 19 der Trinkwasseranlage, hineinragt. Dabei kann es sich bei dem Strömungskanal 19 um ein Hauptrohr der Trinkwasseranlage oder um ein Verbindungsstück, z.B. in Form eines T-Stücks, handeln. Der in den Strömungskanal 19 hineinragende Teil des Rohrs 21 weist eine Krümmung 33 auf, die etwa 90° beträgt. Dadurch öffnet sich das Rohr 21 in diesem Ausführungsbeispiel entgegen der Fliessrichtung des Wassers des Strömungskanals 19. Die hier massgebliche Fliessrichtung des Wassers ist in Fig. 3 mit Pfeilen 34 in Richtung auf die Öffnung des Rohres 21 gekennzeichnet.

Zu seiner Stabilisierung kann der in den Strömungskanal 19 hineinragende Teil des Rohres 21 einen Steg 35 aufweisen, wie es in Fig. 3 dargestellt ist. Dieser Steg 35 ist dann an dem Rohr 21, im Bereich der Krümmung 33, und an der Innenwandung des Strömungskanals 19 angebracht. Ein solcher Steg 35 ist jedoch nicht zwangsläufig erforderlich. Er kann z.B. dann ohne Nachteile für die Stabilität entfallen, wenn das Rohr 21 eingeschweisst ist.

Für die Zwecke von Unterhalts- und Reparaturarbeiten oder dergleichen weist das Rohr 21 ausserdem noch Absperrhähne 37, 37' auf.

Wenn sich das Rohr 21, wie in diesem Ausführungsbeispiel erläutert, entgegen der Fliessrichtung des Wassers in den Strömungskanal öffnet, fliesst das Wasser im Bereich dieser Öffnung in das Rohr 21 hinein, das entsprechend als Zulaufrohr dient. Die auf diese Weise erzeugte Querschnittsverengung sorgt für eine Beschleunigung der Fliessgeschwindigkeit und somit für eine ausreichende kinetische Energie, um das Wasser aus dem Rohr 21 in den Hohlraum 5 des Druckbehälters 1 zu transportieren. Dabei passiert das Wasser das Abschlussstück 29 des siebartigen Hohlzylinders und die siebartigen Öffnungen 31 in dem Abschlussstück 29. Dadurch wird zusätzlich für eine Verwirbelung des Wassers beim Austreten in dem Hohlraum 5 gesorgt, wodurch sich das durch das Rohr 21 neu in dem Hohlraum 5 einströmende Wasser gut mit dem darin bereits befindlichen Wasser vermengen kann.

Ausserdem kann in dem gleichen Masse, wie Wasser aus dem Rohr 21 über die siebartigen Öffnungen 31 im Bereich des Abschlussstücks 29 in den Hohlraum 5 fliesst, in dem Hohlraum 5 befindliches Wasser über die Öffnungen des siebartig ausgebildeten Hohlzylinders 25 in den Ringraum 27 und von dort über das Anschlussrohr 17 zurück in den Strömungskanal 19 der Trinkwasseranlage fliessen.

Auf diese Weise entsteht eine Zwangsdurchströmung des durch die Membran 3 gebildeten Hohlraums 5, die ein Ansiedeln und Vermehren von Bakterien wirksam verhindert.

Aus praktischen Gründen kann es erforderlich sein, den Druckbehälter 1 nicht unmittelbar benachbart zu dem Strömungskanal 19 der Trinkwasserversorgungsanlage anzuordnen, so dass sich dann auch ein Strömungsverlauf ergeben kann, wie er in Fig. 3 mit den Pfeilen 39 angegeben ist. Bei diesem Strömungsverlauf öffnet sich das Rohr 21 nicht mehr entgegen der Fliessrichtung des Wassers des Strömungskanals 19, sondern dazu entgegengesetzt. Entsprechend kehrt sich der Strömungsverlauf des Wassers in der Druckausgleichsvorrichtung um. Das Wasser wird nicht mehr in die Öffnung des Rohres 21 hineingeführt, sondern es entsteht umgekehrt aufgrund eines Venturi-Effektes nach dem Gesetz von Bernoulli eine Sogwirkung, die Wasser aus dem Rohr 21 heraus und in den Strömungskanal 19 ableitet.

Entsprechend dient bei dieser alternativen Ausführung das Anschlussrohr 17 dazu, Wasser aus dem Strömungskanal 19 in den Hohlraum 5 des Druckbehälters 1 zu transportieren. Dabei passiert das Wasser die Öffnungen des siebartig ausgebildeten Hohlzylinders 25 in dem Ringraum 25, um in den Hohlraum 5 zu gelangen. Auch hier wird eine Verwirbelung des Wassers beim Austreten in den Hohlraum 5 erreicht, so dass sich das auf diese Weise in dem Hohlraum 5 einströmende Wasser wiederum gut mit dem darin bereits befindlichen Wasser vermengen kann.

Eine zu dem einströmenden Wasser vergleichbare Menge Wasser wird dann umgekehrt über die siebartigen Öffnungen 31 des Abschlussstücks 29 in dem siebartigen Hohlzylinder 25 in das Rohr 21 geführt, das auf diese Weise als Ablaufrohr dient, und strömt von da aus, beschleunigt durch die zuvor beschriebene Sogwirkung, in den Strömungskanal 19.

Durch diese alternative Ausführungsform, bei welcher das Wasser in dem Rohr 21 und dem Anschlussrohr 17 im Vergleich zu der ersten Ausführungsform in umgekehrter Richtung fliessengelassen wird, ist die erfindungsgemässe Druckausgleichvorrichtung unabhängig von ihrem Aufstellungsort überall einsetzbar und erlaubt insbesondere ein unabhängiges Platzieren des Druckbehälters. Das Wasser muss nicht unbedingt zuerst an dem Rohr 21 vorbeifliessen, sondern kann alternativ über das Anschlussrohr 21 geführt werden.

Dabei ist keine Veränderung der Vorrichtung selbst erforderlich, da die Strömungsrichtung des Wassers zusammen mit den strömungsmässigen Gesetzmässigkeiten bestimmt, ob das Rohr 21 als Zulaufrohr gemäss der ersten Ausführungsform oder als Ablaufrohr, unter Umkehrung der Strömungsverhältnisse, gemäss der weiteren, alternativen Ausführungsform dient.

Untersuchungen haben überdies gezeigt, dass die erfindungsmässe Druckausgleichsvorrichtung deutlich geringere Reibungsverluste bei der Flüssigkeitsströmung verursacht, als dies im bekannten Stand der Technik der Fall ist.

## Patentansprüche

1. Druckausgleichsvorrichtung für flüssigkeitsdurchströmte Systeme, die einen Druckbehälter (1) für den Druckausgleich aufweist, mit einer elastischen Membran (3), die einen Hohlraum (5) für die Aufnahme der Flüssigkeit bildet, und einem an den Hohlraum (5) angrenzenden Druckgasraum (7), wobei die Membran (3) über ein Verbindungsmittel (15) mit einem Anschlussrohr (17) für die Flüssigkeit verbunden ist, ein separat dazu geführtes Rohr (21) für die Flüssigkeit über das Verbindungsmittel (15) in den Hohlraum (5) ragt, dabei von einem siebartige ausgebildeten Hohlzylinder (25) konzentrisch umgeben ist, so dass zwischen dem äusseren Umfang des Rohres (21) und dem Hohlzylinder (25) ein Ringraum (27) definiert ist, und wobei der Hohlzylinder (25) in ein Abschlussstück (29) mündet, in das sich das Rohr (21) öffnet, und das siebartige Öffnungen (31) für das Ausströmen der Flüssigkeit in den Hohlraum (5) aufweist, und wobei das Rohr (21) im Betriebszustand in das flüssigkeitsdurchströmte System ragt und das Anschlussrohr (17) für die Flüssigkeit im Betriebszustand in das flüssigkeitsdurchströmte System mündet.

2. Druckausgleichsvorrichtung nach Anspruch 1, **dadurch gekennzeichnet, daß** die Membran (3) als Blasenmembran und aus einem lebensmittelechten Kunst- oder Naturstoff gebildet ist.

3. Druckausgleichsvorrichtung nach Anspruch 2, **dadurch gekennzeichnet, daß** der Kunst- oder Naturstoff ausgewählt ist aus Gummi in Form von Naturkautschuk oder synthetischem Kautschuk.

4. Druckausgleichsvorrichtung nach einem der Ansprüche 1 bis 3, **dadurch gekennzeichnet, dass** das Verbindungsmittel in Form eines Anschlussstutzens (15) ausgebildet ist, und dass die Membran (3) einen Rand (9) aufweist, mit dem sie zwischen einem Flansch (11) des Druckbehälters (1) und einem Flansch (13) des Anschlussstutzens (15) eingespannt ist, wobei der Flansch (13) des Anschlussstutzens (15) einen Vorsprung (23) definiert, indem er einen kleineren Innendurchmesser aufweist als der Flansch (11) des Druckbehälters (1).

5. Druckausgleichsvorrichtung nach Anspruch 4, **dadurch gekennzeichnet, dass** der siebartig ausgebildete Hohlzylinder (25) auf dem Vorsprung (23) gelagert ist, wobei er das Rohr (21) im Bereich von dessen Erstreckung in den Hohlraum (5) hinein konzentrisch umgibt.

6. Druckausgleichsvorrichtung nach einem der Ansprüche 1 bis 5, **dadurch gekennzeichnet, daß** zwischen dem äusseren Umfang des Rohres (21) und dem Hohlzylinder (25) ein Ringraum (27) definiert ist, der in ein Abschlussstück (29) mündet.

7. Druckausgleichsvorrichtung nach Anspruch 6, **dadurch gekennzeichnet, daß** sich das Rohr (21) in das Abschlussstück (29) hinein öffnet, und dass das Abschlussstück (29) an der dieser Mündung des Rohres (21) gegenüber liegenden Begrenzung siebartige Öffnungen (31) aufweist.

8. Verwendung der Druckausgleichsvorrichtung nach einem der Ansprüche 1 bis 7 als Druckschlag- und Pulsationsdämpfer in Wasserversorgungs- und entsorgungsanlagen, als Druckhalte- und Ausdehnungs- bzw. Expansionsgefäss, im Lebensmittelbereich und in der Trinkwasserversorgung, im Heizungsbereich und als Energiespeicher.

## Claims

1. Pressure compensating device for fluid-conducting systems, which features a pressure container (1) for pressure compensation, with an elastic diaphragm (3), which forms a cavity (5) for receiving the fluid, and a pressure chamber of gas (7) adjoining the cavity (5), whereby the diaphragm (3) is connected via a connecting means (15) to a connecting pipe (17) for the fluid, a separately led pipe (21) for the fluid extends via the connecting means (15) into the cavity (5), while being concentrically encircled by a hollow cylinder (25) shaped like a sieve, defining an annular space (27) between the outer circumference of the pipe (21) and the hollow cylinder (25), and whereby the hollow cylinder (25) opens into an end piece (29), into which the pipe (21) opens, and which features sieve-like perforations (31) for the fluid to flow out into the cavity (5), and whereby in operating condition the pipe (21) extends into the fluid-conducting system, and the connecting pipe (17) for the fluid in operating condition opens into the fluid-conducting system.

2. Pressure compensating device according to Claim 1, **characterised in that** the diaphragm (3) is formed as a bladder diaphragm and made of a food-safe synthetic or natural material.

3. Pressure compensating device according to Claim 2, **characterised in that** the synthetic or natural material is selected to be rubber in the form of natural or synthetic rubber.

4. Pressure compensating device according to one of the Claims 1 to 3, **characterised in that** the connecting means is designed in the form of a connecting mount (15), and that the diaphragm (3) has a border (9) by means of which it is held pressed between a flange (11) of the pressure container (1) and a flange (13) of the connecting mount (15), and where the flange (13) of the connecting mount (15) defines a protruding ledge (23), by it having a smaller inside diameter than the flange (11) of the pressure container (1).

5. Pressure compensating device according to Claim 4, **characterised in that** the hollow cylinder (25) shaped as a sieve is mounted on the protruding ledge (23), while concentrically encircling the pipe (21) in the region where it extends into the cavity (5).

6. Pressure compensating device according to one of the Claims 1 to 5, **characterised in that** the outside circumference of the pipe (21) and the hollow cylinder (25) define an annular space (27) between them, which opens into an end piece (29).

7. Pressure compensating device according to Claim 6, **characterised in that** the pipe (21) opens into the end piece (29), and that the end piece (29) features sieve-like perforations (31) on the boundary located opposite to this opening of the pipe (21).

8. Use of the pressure compensating device according to one of the Claims 1 to 7 as hydraulic shock and pulsation absorber in water supply and water disposal installations, as pressure accumulator and expansion vessel, in the foodstuffs sector and in the potable water supply, in the heating sector, and as energy storage device.

## Revendications

1. Dispositif d'équilibrage de pression pour systèmes parcourus par un fluide, équipé d'une cuve de pression (1) dévolue à l'équilibrage de pression, comprenant une membrane élastique (3) qui forme une cavité (5) destinée à recevoir le fluide, et une chambre (7) à gaz comprimé attenante à ladite cavité (5), ladite membrane (3) étant reliée, par l'intermédiaire d'un moyen de liaison (15), à une tubulure de raccordement (17) dédiée au fluide, sachant qu'une tubulure (21) à implantation distincte, dédiée audit fluide, s'engage dans ladite cavité (5) par l'intermédiaire dudit moyen de liaison (15), en étant alors entourée concentriquement par un cylindre creux (25) de réalisation du type crible, définissant ainsi un compartiment annulaire (27) entre ledit cylindre creux (25) et le pourtour extérieur de ladite tubulure (21) ; sachant que ledit cylindre creux (25) débouche dans une pièce d'extrémité (29) avec laquelle ladite tubulure (21) vient s'aboucher, et qui est percée d'orifices (31) du type crible, affectés à la sortie dudit fluide affluant dans ladite cavité (5) ; et sachant que ladite tubulure (21) s'engage, en mode opérant, dans le système parcouru par le fluide et que ladite tubulure de raccordement (17) dédiée au fluide débouche, en mode opérant, dans ledit système parcouru par ledit fluide.

2. Dispositif d'équilibrage de pression selon la revendication 1, **caractérisé par le fait que** la membrane (3) se présente comme une vessie, et consiste en un matériau synthétique ou naturel à compatibilité alimentaire.

3. Dispositif d'équilibrage de pression selon la revendication 2, **caractérisé par le fait que** le matériau synthétique ou naturel est sélectionné à partir du caoutchouc, sous forme de caoutchouc naturel ou de caoutchouc de synthèse.

4. Dispositif d'équilibrage de pression selon l'une des revendications 1 à 3, **caractérisé par le fait que** le moyen de liaison (15) est réalisé sous la forme d'un manchon de raccordement ; et **par le fait que** la membrane (3) est pourvue d'un rebord (9) par lequel elle est enserrée entre un collet (11) de la cuve de pression (1) et un collet (13) dudit manchon de raccordement (15), ledit collet (13) du manchon de raccordement (15) définissant une zone protubérante (23) du fait qu'il présente un plus petit diamètre intérieur que ledit collet (11) de la cuve de pression (1).

5. Dispositif d'équilibrage de pression selon la revendication 4, **caractérisé par le fait que** le cylindre creux (25), de réalisation du type crible, est monté sur la zone protubérante (23) en entourant concentriquement la tubulure (21) dans la région du tracé de cette dernière qui pénètre dans la cavité (5).

6. Dispositif d'équilibrage de pression selon l'une des revendications 1 à 5, **caractérisé par le fait qu'**un compartiment annulaire (27), débouchant dans une pièce d'extrémité (29), est défini entre le cylindre creux (25) et le pourtour extérieur de la tubulure (21).

7. Dispositif d'équilibrage de pression selon la revendication 6, **caractérisé par le fait que** la tubulure (21) vient s'aboucher avec la pièce d'extrémité (29) ; et **par le fait que** ladite pièce d'extrémité (29) comporte des orifices (31), du type crible, au niveau de la délimitation pointant à l'opposé de cette embouchure de ladite tubulure (21).

8. Utilisation du dispositif d'équilibrage de pression conforme à l'une des revendications 1 à 7, en tant qu'amortisseur d'à-coups de pression et d'ondes pulsatoires dans des installations d'adduction et d'évacuation d'eau, en tant que vase d'entretien de pression et vase de dilatation ou d'expansion dans le domaine alimentaire et dans la distribution d'eau potable, dans le domaine du chauffage, et en tant qu'accumulateur d'énergie.
